# EUROPEAN PATENT SPECIFICATION

(11) **EP 1 718 097 B1**
(45) Date of publication and mention of the grant of the patent: **22.10.2008**
(21) Application number: 06008570.1
(22) Date of filing: 25.04.2006
(51) Int. Cl.: H04Q 7/38

(54) **Identification of Multicast Broadcast Service content broadcasts**
Identifizierung von Multicast Broadcast Service Inhaltsausstrahluungen
Identification des diffusions de contenus type "Multicast Broadcast Service"

(30) Priority: 25.04.2005 KR 20050034255; 27.04.2005 KR 20050035308; 03.05.2005 KR 20050036917
(43) Date of publication of application: 02.11.2006
(73) Proprietor: Samsung Electronics Co., Ltd., Yeongtong-gu Suwon-si, Gyeonggi-do (KR)
(72) Inventor: Son, Yeong-Moon, Suwon-si, Gyeonggi-do (KR); Son, Jung-Je, Suwon-si, Gyeonggi-do (KR); Lim, Hyoung-Kyu, Suwon-si, Gyeonggi-do (KR); Lee, Sung-Jin, Suwon-si, Gyeonggi-do (KR); Kang, Hyun-Jeong, Suwon-si, Gyeonggi-do (KR); Koo, Chang-Hoi, Suwon-si, Gyeonggi-do (KR); Kim, Young-Ho, Suwon-si, Gyeonggi-do (KR)
(74) Representative: Grünecker, Kinkeldey, Stockmair & Schwanhäusser Anwaltssozietät

(56) References cited:
- US-A- 6 111 611
- IEEE 802.16: "Draft IEEE Standard for Local and metropolitan area networks; Part 16: Air Interface for Fixed and Mobile Broadband Wireless Access Systems; Amendment for Physical and Medium Access Control Layers for Combined Fixed and Mobile Operation in Licensed Bands; IEEE P802.16e/D7"[Online] 7 April 2005 (2005-04-07), pages 1-19, XP002394903 IEEE Standards Activities Department; Piscataway, NJ, USA Retrieved from the Internet: URL:http://www.ieee802.org/16/pubs/80216e. html> [retrieved on 2006-08-03]
- SAMSUNG ELECTRONICS CO.LTD. ET AL: "MBS Refinement; IEEE C802.16e-05/242r1"[Online] 3 May 2005 (2005-05-03), pages 0-7, XP002394904 Retrieved from the Internet: URL:http://www.ieee802.org/16/tge/contrib/ C80216e-05_242r1.pdf> [retrieved on 2006-08-03]
- SAMSUNG ELECTRONICS CO. LTD.: "MBS Refinement; IEEE C802.16e-05/242"[Online] 28 April 2005 (2005-04-28), pages 0-7, XP002394905 Retrieved from the Internet: URL:http://www.ieee802.org/16/tge/contrib/ C80216e-05_242.pdf> [retrieved on 2006-08-03]

## Description

### BACKGROUND OF THE INVENTION

### 1. Field of the Invention

The present invention relates generally to broadcast services in a mobile communication system, and in particular, to a system and method for providing broadcast services to a plurality of mobile stations.

### 2. Description of the Related Art

There is ongoing research on a 4^{th} generation (4G) mobile communication system, to provide users with services having various Quality-of Services (QoS) at a data rate of about 100Mbps. The 4G mobile communication system is the next generation communication system. The current 3^{rd} generation (3G) communication system generally supports a data rate of about 384Kbps in an outdoor channel environment having bad channel conditions, and supports a data rate of about 2Mbps at the highest even in an indoor channel environment having good channel conditions.

The 4G communication system is a Broadband Wireless Access (BWA) communication system, and the BWA communication system is evolving into multimedia broadcast/communication systems capable of transmitting multimedia service. In order to support the multimedia broadcast/communication, a base station (BS) multicasts and broadcasts one or multiple multimedia data sources to a plurality of mobile stations (MSs). The multicast and broadcast service for providing broadcast services in the BWA communication system is called "Multicast and Broadcast Service (MBS)." That is, "MBS" may be equal in meaning to the "broadcast service." MBS supports transmission of multimedia information such as real-time video and audio, still video, and text information, and can simultaneously provide video data as well as audio data over a broadcast channel, for the multimedia transmission.

Draft IEEE Standard for Local and Metropolitan Network: Part 16: Air Interface for Fixed and Mobile Broadband Wireless Access System; Amendment for Physical and Medium Access Control Layers for Combined Fixed and Mobile Operation in Licensed Bands; IEEE Standards Activities Department; Piscataway, NJ, USA: IEEE P802.16e/D7; 07 April 25 discloses such a system.

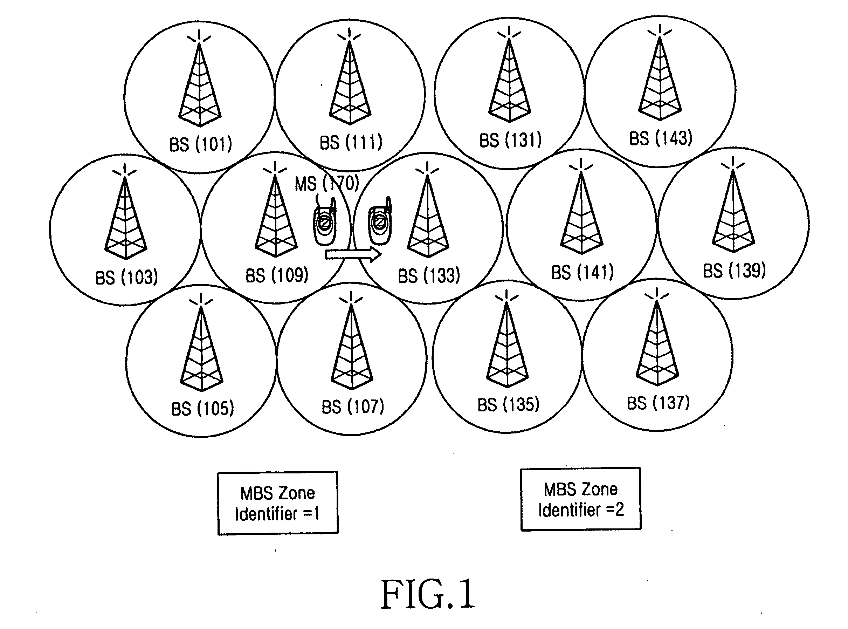

FIG. 1 is a diagram schematically illustrating MBS system architecture in a general mobile communication system, particularly in a BWA communication system.

Referring to FIG. 1, a plurality of cells can be included into one logical group for defining a broadcast service area according to its geographical location. The logical group is called an "MBS zone." That is, cells 101, 103, 105, 107, 109 and 111 constitute one MBS zone and have an identifier '1' for MBS zone identification, and cells 131, 133, 135, 137, 139, 141 and 143 constitute another MBS zone and have an MBS zone identifier '2'.

BSs, included in each of the MBS zones, multicast/broadcast the same broadcast data to MSs at the same time using the same frequency band, and MSs located in each MBS zone receive the broadcast in the same way. Servers for managing the MBS zones, i.e., MBS servers (not shown), are matched to the MBS zones on a one-to-one basis, and manage a broadcast service list.

For example, in order for an MS 170 to first receive a first broadcast service in the cell 109 with an MBS zone identifier '1', it should perform MBS connection setup for the first broadcast service with a BS 109 of the cell. The MBS connection setup is achieved by the MS 170 through exchange of Dynamic Service Addition_REQuest (DSA_REQ) and DSA_ReSPonse (DSA_RSP) messages with the BS 109. When the MS 170 moves to other BSs in the same MBS zone after completing the MBS connection setup for the first broadcast service, there is no need to re-perform the MBS connection setup for the first broadcast service. This is because broadcast services provided in the same MBS zone have the same connection identifier (CID) and the same frame structure.

Assume that the MS 170 moves from the current cell 109 to another cell 133 with a different MBS zone identifier. A CID of the first broadcast service commonly provided in an area with the MBS zone identifier '1' and an area with the MBS zone identifier '2' has a different value in each of the MBS zones. In addition, the frame structure is also different in each of the MBS zones. Therefore, when moving to another cell having a different MBS zone identifier, the MS 170 should re-perform MBS connection setup.

The MBS connection setup should be performed as many times as the number of broadcast services that the MS 170 desires to receive. In other words, in order to receive a second broadcast service after completing the connection setup for the first broadcast service, the MS 170 should re-perform connection setup for the second broadcast service.

In light of MBS zones, the broadcast services can be classified as follows:.
- Multi-BS Broadcast Service: Multi-BS Broadcast Service refers to a broadcast service that is performed in an MBS zone including a plurality of BSs. In this case, for the broadcast service in the MBS zone, the same broadcast messages are located/transmitted on the same regions in frequency-time domains of downlink frames transmitted by all BSs in the MBS zone, and a Multicast CID used for connection of each broadcast service, i.e., MBS connection, is also allocated the same value. That is, it means that all BSs in the MBS zone provide the same broadcast service in the same way. For example, for a CID Ballocated to a broadcast service A multicast by a first BS, the broadcast service A may exist even in a second BS in the same MBS zone, and a CID allocated to the broadcast service is equal to the CID B used in the first BS.
   In addition, an MBS zone in a downlink frame for transmitting actual data of the broadcast service A has the same location, the same size and the same time band in downlink frame regions from all BSs (in order to obtain a physical macro diversity effect for a signal).
- Single-BS Broadcast Service: Single-BS Broadcast Service, unlike the Multi-BS Broadcast Service, refers to a broadcast service that is available only in one BS. This means a broadcast service provided in one BS in the form of a hot spot. A CID allocated to the broadcast service, unlike that in the Multi-BS Broadcast Service, is allocated by one within a Transport CID range managed in one BS. The Transport CID, unlike the Multicast CID of the Multi-BS Broadcast Service, is unique only in a corresponding BS.

CIDs used for the MBS connection are shown in Table 1 below.

**Table 1**

| CID | Value (hexadecimal) | Description |
|---|---|---|
| Initial Ranging | 0000 | Used by SS and BS during initial ranging process. |
| Basic CID | 0001-m | The same value is assigned to both the DL and UL connection. |
| Primary management | m+1-2m | The same value is assigned to both the DL and UL connection. |
| Transport CIDs, Secondary Mgt CIDs | 2m+1-FE9F | For the secondary management connection, the same value is assigned to both the DL and UL connection. |
| Multicast CIDs | FEA0-FEFE | For the downlink multicast service, the same value is assigned to all MSSs on the same channel that participate in this connection. |
| AAS initial ranging CID | FEFF | A BS supporting Adaptive Antenna System (AAS) shall use this CID when allocating an Initial Ranging period for AAS devices. |
| Multicast polling CIDs | FF00-FFFA | A BS may be included in one or more multicast polling groups for the purposes of obtaining bandwidth via polling. These connections have no associated service flow. |
| Normal mode multicast CID | FFFB | Used in DL-MAP to denote bursts for transmission of DL broadcast information to normal mode MS. |
| Sleep mode multicast CID | FFFC | Used in DL-MAP to denote bursts for transmission of DL broadcast information to Sleep mode MS. |
| Idle mode multicast CID | FFFD | Used in DL-MAP to denote bursts for transmission of DL broadcast information to Idle mode MS. |
| Padding CID | FFFE | Used for transmission of padding information by SS and BS. |
| Broadcast CID | FFFF | Used for broadcast information that is transmitted on a downlink to all MS. |

The CIDs shown in Table 1 have the following uses and functions:
- Initial Ranging CID: This is a CID for a Ranging Request (RNG_REQ) message transmitted by an MS (or a subscriber station (SS)) to a BS to be allocated a Primary CID and a Basic CID. All MSs should be aware of a CID value '0x0000' of the Initial Ranging CID. The MS informs the BS of its Medium Access Control (MAC) address using an RNG_REQ message during a negotiation process with the BS. Accordingly, the BS maps the MAC address of the MS to CIDs indicating the MS, i.e., a Primary Management CID and a Basic CID.
- Primary Management CID: This is a CID used for MAC Management message handling that is necessarily performed between an MS and a BS, and the Primary Management CID is used for identifying the MSs. As shown in Table 1, one BS can manage and identify m MSs. The Primary Management CID is recognized by the MS by receiving a Ranging Response (RNG_RSP) message.
- Basic CID: This is a CID used for MAC Management message handling that is optionally performed between an MS and a BS, and the Basic CID is also used for identifying the MSs. As shown in Table 1, the number of the Basic CIDs is m, which is equal to the number of Primary Management CIDs. The Basic CID, like the Primary Management CID, is recognized by the MS by receiving an RNG_RSP message.
- Broadcast CID: This means a CID of messages that all MSs receive and handle, and has a CID value '0xFFFF' that all MSs previously recognize.
- Multicast Polling CID: This is a CID that is allocated or de-allocated by a Multicast Polling Allocation Request (MCA_REQ) message, and is used during Multicast Polling Service.
- Transport CIDs, Secondary Management CID: Transport CID is a CID used for general data traffic transmission/reception, and is included in a DSA_RSP message received from a BS in response to a BS-Initiated DSA_REQ message and an MS-Initiated DSA_REQ message. Secondary Management CID means a Management Connection CID for an upper layer such as a Simple Network Management Protocol/Trivial File Transfer Protocol (SNMP/TFTP) layer, and is included in a Registration Response (REG_RSP) message to be allocated to an MS. The number of Transport CIDs and Secondary Management CIDs falls within a range of 2m+1 ∼ 0xFE9F.
- AAS initial ranging CID: This is a CID needed when initial ranging is performed in an Adaptive Antenna System (AAS).
- Normal mode multicast CID: This is a CID indicating the multicast message that only the MSs normally operating after completing a network registration process with a BS not in a sleep mode or an idle mode receive and handle, and has a CID value '0xFFFB' that all MSs are already aware of.
- Sleep mode multicast CID: This is a CID indicating the multicast message that only the MSs in the sleep mode handle, and has a CID value '0xFFFC' that all MSs are already aware of.
- Idle mode multicast CID: This is a CID indicating the multicast message that only the MSs in the idle mode handle, and has a CID value '0xFFFD' that all MSs are already aware of.
- Padding CID: This is a CID indicating the dummy message sent on a reserved (burst) region in an uplink/downlink frame, and has a CID value '0xFFFE' that all MSs are already aware of.
- Multicast CIDs: This is a CID used for multicasting a broadcast message. That is, this is a CID used for distinguishing an MBS connection with a BS from other connections. Broadcast services provided in the same MBS zone have the same Multicast CID. For example, if a BS A in the MBS zone allocates '0xFFA0' as a Multicast CID for a particular MBS service, other BSs in the same MBS zone should also allocate '0xFFA0' as a Multicast CID for the particular MBS broadcast. Herein, the total number of the Multicast CIDs is 95.

Generally, the CID has a 16-bit size, and is used in a header of a MAC frame to identify connections. Alternatively, the CID can be used in a MAC Service Data Unit (SDU), like the CID in a traffic indication message.

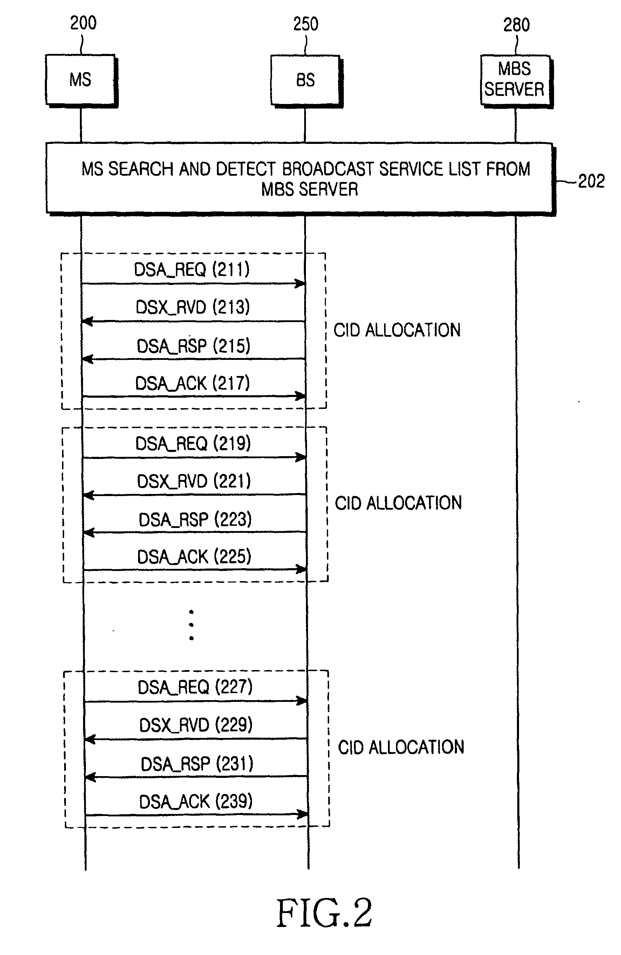

FIG. 2 is a signaling diagram illustrating a broadcast service connection procedure in a conventional BWA communication system.

Referring to FIG. 2, an MS 200 searches a broadcast service list broadcast from an MBS server 280 to detect a broadcast service receivable via a BS 250 in step 202. The broadcast service list includes information on the broadcast services that the MS 200 can receive.

The MS 200 transmits a DSA_REQ message to the BS 250 to set up an MBS connection in step 211. A format of the DSA_REQ message is shown in Table 2 below.

**Table 2**

| Syntax | Size | Notes |
|---|---|---|
| DSA-REQ_Message_Format() { | | |
| Management Message Type = 11 | 8 bits | TBD |
| Transaction ID | 16 bits | Unique identifier for this transaction assigned by the sender. |
| TLV Encoded Information | Variable | TLV specific |
| } | | |

In the DSA_REQ message, a Transaction ID field indicates a particular value to identify DSx_xxx messages transmitted/received when an MS performs a dynamic service-related process several times. A TLV (Type/Length/Value) Encoded Information field includes therein optional information. For example, the TLV Encoded Information field can include therein information on the broadcast service requested by the MS 200.

Herein, the MS 200 includes information indicating whether it requests an MBS connection or a general service connection in the TLV Encoded Information field, and transmits the TLV Encoded Information field to the BS 250 along with the DSA_REQ message. The indication information is shown in Table 3 below.

**Table 3**

| Type | Length | Value | Scope |
|---|---|---|---|
| [145/146].4 | 1 | 0: No available MBS | DSx-REQ |
| | | 1: single-BS-MBS | DSx-RSP |
| | | 2: Multi-BS MBS | DSx-ACK |

As shown in Table 3, upon receiving a DSA_REQ message with Value '0', the BS 250 recognizes that the MS 200 requests the general service connection other than the MBS connection. Upon receiving a DSA_REQ message with Value '1' (Single-BS Broadcast Service) or Value '2' (Multi-BS Broadcast Service), the BS 250 recognizes that the MS 200 requests connection setup to receive a broadcast service. Alternatively, the DSA_REQ message may be transmitted from the BS 250 to the MS 200. In other words, for the connection setup, the MS 200 can transmit the DSA_REQ message to the BS 250, or the BS 250 can transmit the DSA_REQ message to the MS 200. When the BS 250 transmits the DSA_REQ message to the MS 200, the DSA_REQ message transmitted by the BS 250 includes therein QoS parameters and a broadcast service ID (i.e., Multicast CID or Transport CID) for the corresponding broadcast service in a TLV Encoding format included in a DSA_RSP message, which will be described with reference to Table 7 below. Although the BS 250 can send a request for the Single-BS Broadcast Service or the Multi-BS Broadcast Service to the MS 200, it will be assumed herein that the MS 200 sends a request for the Single-BS Broadcast Service or the Multi-BS Broadcast Service to the BS 250.

Therefore, the BS 250 transmits a Dynamic Service X_ReceiVeD (DSX_RVD) message to the MS 200 in step 213. The DSX_RVD message is used to inform the MS 200 that the BS 250 normally receives a DSA-related message such as the DSA_REQ message and is handling the received message.

**Table 4**

| Syntax | Size | Notes |
|---|---|---|
| DSX-RVD_Message_Format() { | | |
| Management Message Type = 30 | 8 bits | TBD |
| Transaction ID | 16 bits | |
| Confirmation Code | 8 bits | |
| } | | |

In Table 4, as Transaction ID uses the value used in the DSA_REQ message, the MS 200 can recognize that the DSX_RVD message is a response to the DSA_REQ message:

Thereafter, the BS 250 transmits a DSA_RSP message shown in Table 5 below in response to the broadcast service connection request from the MS 200 in step 215.

**Table 5**

| Syntax | Size | Notes |
|---|---|---|
| DSA-RSP_Message_Format() { | | |
| Management Message Type = 12 | 8 bits | TBD |
| Transaction ID | 16 bits | |
| Confirmation Code | 8 bits | |
| TLV Encoded Information | Variable | TLV specific |
| } | | |

In Table 5, Confirmation Code (CC) has a format shown in Table 6 below, and includes response information to the DSA_REQ message.

**Table 6**

| CC | Status |
|---|---|
| 0 | OK/success |
| 1 | reject-other |
| 2 | reject-unrecognized-configuration-setting |
| 3 | reject-temporary/ reject-resource |
| 4 | reject-permanent/ reject-admin |
| 5 | reject-not-owner |
| 6 | reject-service-flow-not-found |
| 7 | reject-service-flow-exists |
| 8 | reject-required-parameter-not-present |
| 9 | reject-header-suppression |
| 10 | reject-unknown-transaction-id |
| 11 | reject-authentication-failure |
| 12 | reject-add-aborted |
| 13 | reject-exceeded-dynamic-service-limit |
| 14 | reject-not-authorized-for-the-requested-SAID |
| 15 | reject-fail-to-establish-the-requested-SA |

In Table 6, the BS 250 sends a DSA_RSP message with Confirmation Code (CC) = '0' (OK/success) as an affirmative response to the DSA_REQ message. In this case, the DSA_RSP message includes therein QoS parameters and a broadcast service identifier (i.e., Multicast CID or Transport CID) for the corresponding broadcast service in the TLV Encoding format shown in Table 7 below. The other code values except for the code value '0' are not directly related to the present invention, so a description thereof will be omitted herein.

**Table 7**

| Type | Length | Value | Scope |
|---|---|---|---|
| [145/146].2 | 2 | CID | DSx-REQ |
| | | | DSx-RSP |
| | | | DSx-ACK |

If the MS 200 transmits a DSA_REQ message for a general connection request, the CID of Table 7 should be a CID for a service corresponding to the general connection request.

Upon receiving the DSA_RSP message, the MS 200 transmits a DSA Acknowledgement (DSA_ACK) message shown in Table 8 to the BS 250 in step 217.

**Table 8**

| Syntax | Size | Notes |
|---|---|---|
| DSA-ACK_Message_Format() { | | |
| Management Message Type = 13 | 8 bits | TBD |
| Transaction ID | 16 bits | |
| Confirmation Code | 8 bits | |
| TLV Encoded Information | Variable | TLV specific |
| } | | |

After being allocated the CID for one broadcast service up to step 217, the MS 200 performs steps 219 to 225 or steps 227 to 239 in order to be allocated CIDs for other broadcast services.

It can be understood from the foregoing description that one procedure in which an MS transmits a DSA_REQ message to a BS and the BS transmits a DSA_RSP message to the MS in response thereto establishes only one broadcast service connection. In other words, in order to set up a plurality of broadcast service connections, the MS transmits the DSA_REQ message a plurality of times. Upon receiving the DSA_REQ messages from the MS, the BS should transmit the DSA_RSP message to the MS in response to every DSA_REQ message.

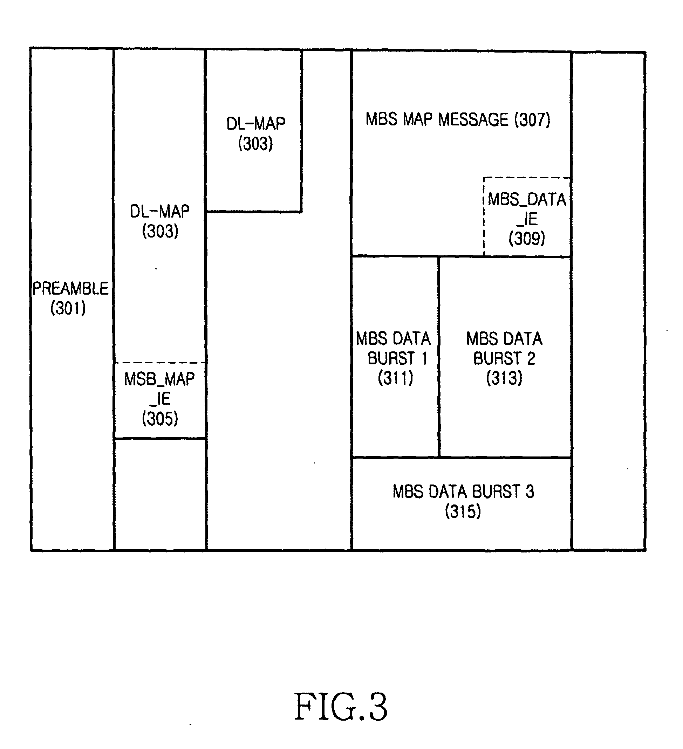

FIG. 3 is a diagram schematically illustrating a general downlink frame structure including MBS zone information.

Referring to FIG. 3, the downlink frame includes a preamble region 301, a downlink MAP (DL-MAP) region 303, and MBS-related regions 305, 307, 309, 311, 313, and 315. The preamble region 301 is used for transmitting a synchronization signal, i.e., a preamble sequence, for acquiring mutual synchronization between a BS and an MS. The DL-MAP region 303 is used for transmitting a DL-MAP message, and includes an MBS_MAP Information Element (IE) region 305 when MBS is provided. The MBS_MAP IE region 305 includes information necessary for decoding an MBS field. A format of the MBS_MAP IE region 305 is shown in Table 9 below.

**Table 9**

| Syntax | Size (bits) | Notes |
|---|---|---|
| MBS_MAP_IE() { | | |
| Extended DIUC | 4 | MBS_MAP=0x0A |
| Length | 4 | |
| MBS Zone Identifier | 7 | MBS Zone identifier corresponds to the identifier provided by the BS at connection initiation |
| Macro diversity enhanced | 1 | 0=Non Macro diversity enhanced zone |
| | | 1=Macro diversity enhanced zone |
| If(Macro diversity enhanced=1) { | | |
| Permutation | 2 | 0b00= PUSC permutation |
| | | 0b01= FUSC permutation |
| | | 0b10= Optional FUSC permutation |
| | | 0b11= Adjacent subcarrier permutation |
| Idcell | 6 | |
| } | | |
| OFDMA symbol offset | 7 | OFDMA symbol offset with respect to start of the MBS region |
| DIUC change indication | 1 | Used to indicate DIUC change is included |
| If(DIUC change indication=1) { | | |
| Reserved | 1 | |
| Boosting | 3 | |
| DIUC | 4 | |
| No. subchannels | 6 | |
| No. OFDMA symbols | 2 | |
| Repetition coding indication | 2 | 0b00=No repetition coding |
| | | 0b01=repetition coding of 2 used |
| | | 0b10=repetition coding of 4 used |
| | | 0b11=repetition coding of 6 used |
| } else { | | |
| DIUC | 4 | |
| CID | 12 | 12 LSB of CID |
| OFDMA symbol offset | 8 | The offset of the OFDMA symbol in which the burst starts, measured in OFDMA symbols from beginning of the downlink frame in which the DL-MAP is transmitted. |
| Subchannel offset | 6 | The lowest index OFDMA subchannel used for carrying the burst, starting from subchannel 0. |
| Boosting | 3 | |
| SLC_3_Indication | 1 | Used to notify sleep mode class 3 is used for single BS MBS service |
| No. OFDMA symbols | 6 | |
| No. subchannels | 6 | |
| Repetition coding indication | 2 | 0b00=No repetition coding |
| | | 0b01=Repetition coding of 2 used |
| | | 0b10=Repetition coding of 4 used |
| | | 0b11=Repetition coding of 6 used |
| If(SLC_3_Indication=0) { | | |
| Next MBS frame offset | 8 | The Next MBS frame offset value is lower 8bits of the frame number in which the BS shall transmit the next MBS frame. |
| Nest MBS OFDMA symbol offset | 8 | The offset of the OFDMA symbol in which the next MBS zone starts, measured in OFDMA symbols from the beginning of the downlink frame in which the MBS-MAP is transmitted. |
| } | | |
| } | | |
| If! (byte boundary) { | | |
| Padding nibble | Variable | Padding to reach byte boundary |
| } | | |
| } | | |

In Table 9, MBS Zone identifier indicates an identifier of a corresponding MBS zone, and OFDMA Symbol Offset indicates a start offset of an MBS-MAP message in the MBS field. In Table 9, information following DIUC change indication indicates size information of the MBS-MAP message in the MBS field and information necessary for decoding the MBS-MAP message.

The MBS field is comprised of an MBS-MAP message 307 including an MBS_Data_IE 309, and fields 311, 313 and 315 used for transmitting MBS data burst.

The MBS-MAP message 307 includes location information where an MS receiving an MBS service receives MBS data bursts, and information necessary for decoding the data bursts. A format of the MBS-MAP message is shown in Table 10 below.

**Table 10**

| Syntax | Size (bits) | Notes |
|---|---|---|
| MBS-MAP Message format ( ) { | | |
| MAC Generic Header | 48 | 6 bytes |
| Management message type=62 | 4 | |
| Frame number | 4 | The frame number is identical to the frame number in the DL-MAP |
| MBS_DIUC_Change_Count | 8 | |
| #MBS_DATA_IE | 4 | Number of included MBS_DATA_IE |
| For(i=0;i<n; i++) { | | n = #MBS_DATA_IE |
| MBS_DATA_IE | Variable | |
| } | | |
| #MBS_DATA_Time_Diversity_IE | 4 | Number of included MBS_DATA_Time_Diversity_IE |
| For(i=0;i<m; i++) { | | m = #MBS_DATA_Time_Diversity_IE |
| MBS_DATA_Time_Diversity_IE | Variable | |
| } | | |
| If(!byte boundary) { | | |
| Padding nibble | 8 | |
| } | | |
| TLV encoding element | | |
| } | | |

In Table 10, the MBS-MAP message includes a plurality of IEs in addition to 6-byte MAC Generic Header. That is, the MBS-MAP message includes 'Management message type' indicating a type of a transmission message, 'Frame number', and MBS data burst information. The frame number is equal to the frame number of the DL-MAP, and 'MBS_DIUC Change Count' indicates whether the current MBS data burst profile is identical to the previous MBS data burst profile. If there is a change in the MBS_DIUC Change Count value, the MS should receive downlink burst profile information included in the MBS-MAP message in the TLV form. If there is no downlink burst profile information included in the MBS-MAP message, the MS can receive downlink burst profile information through the next DCD message reception. MBS_DATA_IE and MBS_DATA_Time_Diversity_IE indicate MBS data burst information that the MS will receive. That is, the MBS_DATA_IE indicates information on the fields 311, 313 and 315 used for transmitting MBS data bursts. The MBS_DATA_Time_Diversity_IE is similar to the MBS_DATA_IE 309 and includes MBS data burst information when there is MBS data for an MS supporting a Hybrid-Automatic Repeat reQuest (H-ARQ) scheme.

A format of the MBS_DATA_IE 309 is shown in Table 11 below.

**Table 11**

| Syntax | Size (bits) | Notes |
|---|---|---|
| MBS_DATA_IE { | | |
| MBS_MAP_Type=0 | 4 | MBS_DATA_IE |
| Next MBS MAP change indication | 1 | This indicates whether the size of MBS-MAP message of next MBS frame for these multicast CIDs included this IE will be different from the size of this MBS-MAP message. |
| No. of Multicast CID | 3 | |
| For(i=0; i<No. of Multicast CIDs; i++) { | | |
| Multicast CID | 12 | 12 LSBs of CID for multicast |
| } | | |
| MBS DIUC | 4 | |
| OFDMA symbol offset | 8 | OFDMA symbol offset with respect to start of the MBS portion |
| Subchannel offset | 6 | OFDMA subchannel offset with respect to start of the MBS portion |
| Boosting | 3 | |
| No. OFDMA symbols | 7 | The size of MBS data |
| No. subchannels | 6 | |
| Repetition coding indication | 2 | 0b00=No repetition coding |
| | | 0b01=Repetition coding of 2 used |
| | | 0b10=Repetition coding of 4 used |
| | | 0b11=Repetition coding of 6 used |
| Next MBS frame offset | 8 | The Next MBS frame offset value is lower 8 bits of the frame number in which the BS shall transmit the next MBS frame. |
| Next MBS OFDMA symbol offset | 8 | The offset of the OFDMA symbol in which the next MBS portion starts, measured in OFDMA symbols from the beginning of the downlink frame in which the MBS-MAP is transmitted. |
| If(Next MBS MAP change indication=1) { | | |
| Next MBS No. OFDMA symbols | 2 | This indicates the size of MBS_MAP message in Next MBS portion where the BS shall transmit the next MBS frame for multicast CIDs in this IE. |
| Next MBS No. OFDMA subchannels | 6 | This ndicates the size of MBS_MAP message in Next MBS portion where the BS shall transmit the next MBS frame for multicast CIDs in this IE. |
| } | | |
| } | | |

In Table 11, the MBS_DATA_IE includes a 'Next MBS MAP change indication' field indicating whether there is a change in size of an MBS-MAP message in the next MBS frame, a 'Multicast CID' field indicating multicast identifier information mapped to the IE information, 'OFDMA Symbol offset' and 'Subchannel offset' fields indicating a start offset of the MBS data burst field, 'No. OFDMA symbols' and 'No. subchannels' fields indicating a size of the MBS data burst field, a 'Repetition coding indication' field necessary for decoding the MBS data burst field, 'Next MBS frame offset' and 'Next MBS OFDMA symbol offset' fields indicating an offset of an MBS-MAP message in the next MBS frame, and 'Next MBS No. OFDMA symbols' and 'Next MBS No. OFDMA subchannels' fields indicating a size of an MBS-MAP message in the next MBS frame when the Next MBS MAP change indication field is set to '1'.

As described above, in the conventional BWA communication system, an MS sends a request for a desired broadcast service to a BS. For example, an MS may request a broadcast service of a broadcasting station A or a broadcast service of a broadcasting station B. However, although the broadcasting station A or the broadcasting station B provide a variety of contents (e.g., drama, sports, movie, etc), the MS has no way to separately request each of the contents.

The total possible number of Multicast CIDs for identifying broadcast services is 95. Therefore, if the number of broadcast services exceeds 95, it is impossible to allocate Multicast CIDs to the exceeding broadcast service. In addition, when the Multicast CIDs are allocated in units of the contents, the lack of the Multicast CIDs becomes considerable, and resource consumption and time delay increase due to an increased number of exchanges of the DSA_REQ and DSA_RSP messages. Accordingly, there is a need for a scheme capable of extending the number of IDs for identifying the broadcast services and the contents and minimizing the resource consumption and the time delay.

### SUMMARY OF THE INVENTION

It is, therefore, an object of the present invention to provide a system and method for extending the number of broadcast service identifiers in a mobile communication system.

It is another object of the present invention to provide a system and method capable of identifying contents in a mobile communication system.

It is further another object of the present invention to provide a broadcast service connection setup method for minimizing resource consumption and time delay in a mobile communication system, and a system thereof.

According to one aspect of the present invention, there is provided a broadcast service connection setup method for receiving a Multicast and Broadcast Service (MBS) by a mobile station (MS) in a mobile communication system supporting the MBS. The method includes sending a connection setup request for a particular broadcast service to a base station (BS); and receiving a first identifier mapped to the particular broadcast service and second identifiers individually mapped to the at least one content broadcast, the first and second identifiers being allocated from the BS.

According to another aspect of the present invention, there is provided a broadcast service connection setup method for providing by a base station (BS) a Multicast and Broadcast Service (MBS) to a mobile station (MS) in a Broadband Wireless Access (BWA) communication system supporting the MBS. The method includes receiving a connection setup request for a particular broadcast service from the MS; and allocating a first identifier mapped to the particular broadcast service and second identifiers individually mapped to the at least one content broadcast, to the MS.

It is possible to provide a broadcast service connection setup method for providing a Multicast and Broadcast Service (MBS) between a mobile station (MS) and a base station (BS) in a Broadband Wireless Access (BWA) communication system supporting the MBS. The method includes sending, by the MS, a connection setup request for a particular broadcast service to the BS; allocating, by the BS, a first identifier mapped to the particular broadcast service and second identifiers individually mapped to the at least one content broadcast, to the MS; and receiving, by the MS, the MBS mapped to the allocated identifiers.

According to yet still another aspect of the present invention, there is provided a broadcast service connection setup system for providing a Multicast and Broadcast Service (MBS) in a Broadband Wireless Access (BWA) communication system supporting the MBS. The broadcast service connection setup system includes a mobile station (MS) for sending a connection setup request for a particular broadcast service and multiple content broadcasts and receiving a first identifier mapped to the particular broadcast service and second identifiers individually mapped to the multiple content broadcasts; and a base station (BS) for allocating the first identifier mapped to the particular broadcast service and the second identifiers mapped to the multiple content broadcasts upon receiving the connection setup request for the particular broadcast service and the multiple content broadcasts provided in the particular broadcast service.

It is further possible to provide a broadcast service connection setup method for providing a Multicast and Broadcast Service (MBS) in a Broadband Wireless Access (BWA) communication system supporting the MBS. The method includes transmitting, by a base station (BS), a connection setup request message with a broadcast service identifier Type/Length/Value (TLV) to a mobile station (MS) to set up connections for a particular broadcast service and multiple content broadcasts provided in the particular broadcast service; and transmitting, by the MS, a response to the connection setup request message to the BS.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram schematically illustrating MBS system architecture in a general mobile communication system;
FIG. 2 is a signaling diagram illustrating a broadcast service connection procedure in a conventional BWA communication system;
FIG. 3 is a diagram schematically illustrating a downlink frame structure including MBS zone information in a general BWA communication system;
FIG. 4 is a signaling diagram illustrating a broadcast service connection procedure in a BWA communication according to the present invention;
FIG. 5 is a flowchart illustrating a process of performing broadcast service connection setup by an MS according to the present invention; and
FIG. 6 is a flowchart illustrating a process of performing broadcast service connection setup by a BS according to the present invention.

### DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness.

The present invention provides a scheme in which a mobile station (MS) sends a connection setup request for multiple broadcast services to a base station (BS) and the BS allocates connection identifiers (CIDs) uniquely mapped to the multiple broadcasts to the MS in a mobile communication system. Herein, the "broadcast service" refers to a broadcast service provided by each individual broadcasting station, or a content broadcast service provided by broadcasting stations.

That is, the present invention provides a scheme for issuing a connection setup request for multiple broadcast services with a single procedure, and provides a method for allocating CIDs for the multiple broadcast services. In addition, the present invention provides a scheme capable of extending the number of Multicast CIDs to allocate a plurality of broadcast service CIDs. To this end, the present invention provides four (4) embodiments below.

In order to send a request for multiple broadcast services to a BS through one DSA_REQ message, the present invention newly defines a 'Multiple Broadcast Service ID Type/Length/Value (TLV) Encoding' for broadcast channel IDs. When an MS sends a request for broadcast service connection and receives a response thereto, the Multiple Broadcast Service ID TLV Encoding is included in a TLV Encoded Information field of a Dynamic Service Addition_REQuest (DSA_REQ) message to indicate the multiple broadcast services requested by the MS. The Multiple Broadcast Service ID TLV Encoding includes therein information on at least one of the broadcast services requested by the MS.

However, a method for indicating the broadcast services requested by the MS can be implemented in various ways according to a level indicating a broadcast service or a broadcast service provider. Therefore, the parameters used in the Multiple Broadcast Service ID TLV Encoding are not related to the present invention, so a detailed description thereof will be omitted.

Table 12 below shows a format of the Multiple Broadcast Service ID TLV Encoding included in the DSA_REQ message.

**Table 12**

| Type | Length | Value | Scope |
|---|---|---|---|
| [145/146].x | Variable | Compound | DSx-REQ |

The parameters indicating the multiple broadcast services are included in the Multiple Broadcast Service ID TLV Encoding shown in Table 13.

**Table 13**

| Type | Length | Value |
|---|---|---|
| [145/146].x.1 | 4 or 6 | IP address MBS Contents Server |
| [145/146].x.2 | 2 | Port Number of MBS Contents |

Table 13 above shows exemplary parameters used in the Multiple Broadcast Service ID TLV Encoding. The Broadcast Service ID TLV of Table 12 can include an IP address and a port number of a BS providing the broadcast service. Upon receiving the DSA_REQ message including the Multiple Broadcast Service ID TLV of Table 12, the BS sets up an MBS connection for each of the multiple broadcast services requested by the MS.

In addition, the present invention newly defines a Logical Channel Identifier (ID). The Logical Channel ID may be used as an ID capable of identifying the multiple contents. Alternatively, the Logical Channel ID can be extended in combination with the Multicast CID, and used for identifying the broadcast services or the contents. For example, the Logical Channel ID can have a total of 256 values of 0 to 255, and is included in a Dynamic Service Addition_REQuest (DSA_REQ) message or a DSA_ReSPonse (DSA_RSP) message. The Logical Channel IE can be included in TLV Encoded Information fields of the above messages, and a format thereof is shown in Table 14 below.

**Table 14**

| Type | Length | Value | Scope |
|---|---|---|---|
| [145/146].y | 1 | Logical Channel ID | DSx-RSP |
| | | (0∼255) | DSx-ACK |

If an MS transmits a DSA_REQ message with the Multiple Broadcast Service ID TLV Encoding to a BS, the BS transmits a DSA_RSP message with information on multiple Logical Channel IDs to the MS. Herein, although the number of the Logical Channel IDs is 256 as shown in Table 14, by way of example, it should be noted that the number of the Logical Channel IDs is extendable according to the number of broadcast services provided in the BS.

For example, an MS according to the present invention may either request allocation of one CID or request allocation of even the IDs mapped to multiple contents. That is, the MS may either request allocation of only the CID of a first broadcasting station, i.e., Transport CID or Multicast CID, or request allocation of not only the CID of the first broadcasting station but also the IDs mapped to contents A, B and C provided in the broadcasting station.

Accordingly, the BS may transmit the DSA_RSP message to the MS along with only the Transport CID or the Multicast CID, or transmit the DSA_RSP message to the MS along with the Multicast CID and Logical Channel IDs mapped to the contents A, B and C. Alternatively, the BS may transmit the DSA_RSP message to the MS along with the Multicast CID and a maximum of 256 IDs of the contents provided in the broadcasting station.

Herein, when a second broadcasting station broadcasts the same contents as the contents A, B and C, the Logical Channel IDs mapped to the contents A, B and C of the second broadcasting station may be either equal to or different from the Logical Channel IDs mapped to the contents A, B and C of the first broadcasting station.

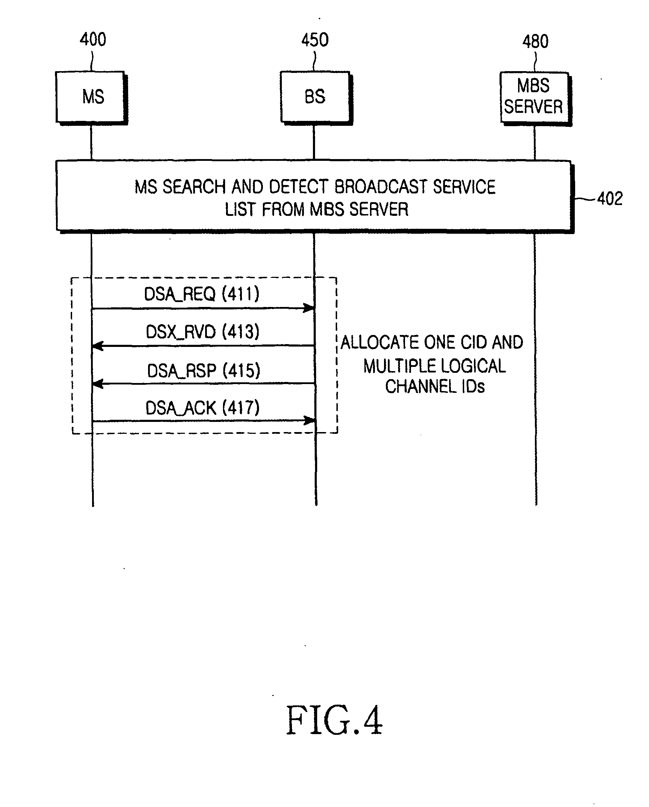

FIG. 4 is a signaling diagram illustrating a broadcast service connection procedure in a BWA communication according to the present invention.

Referring to FIG. 4, an MS 400 searches a broadcast service list broadcast from an MBS server 480 to detect a broadcast service receivable via a BS 450 in step 402. The broadcast service list includes information needed by the MS 400 to receive the broadcast services.

The MS 400 transmits a DSA_REQ message to the BS 450 to request MBS connection setup in step 411. For the DSA_REQ message, either of the conventional DSA_REQ message and the DSA_REQ message newly proposed in the present invention can be used. The DSA_REQ message newly proposed in the present invention refers to a message capable of requesting connections for even the contents provided in the corresponding broadcasting station. The connection request information is included in a TLV Encoded Information field of the DSA_REQ message.

Upon receiving the DSA_REQ message, the BS 450 recognizes that the MS 400 requests connection setup to receive the broadcast service. It is assumed herein that the MS 200 requests Single-BS Broadcast Service or Multi-BS Broadcast Service, and each of the Broadcast Services provides a plurality of content broadcasts.

Therefore, the BS 450 transmits a Dynamic Service X_ReceiVeD (DSX_RVD) to the MS 400 in step 413. The DSX_RVD message is used to inform the MS 400 that the BS 450 normally receives a DSA-related message such as the DSA_REQ message and is handling the received message.

Thereafter, the BS 450 transmits a DSA_RSP message newly defined in the present invention to the MS 400 in response to the broadcast service connection request from the MS 400 in step 415. A TLV Encoded Information field of the newly defined DSA_RSP message is allocated a CID mapped to the broadcast service connection-requested by the MS 400 and Logical Channel IDs mapped to multiple content broadcasts. It should be noted herein that the CID is a Transport CID for the Single-BS Broadcast Service and a Multicast CID for the Multi-BS Broadcast Service.

Upon receiving the DSA_RSP message, the MS 400 transmits a DSA Acknowledgement (DSA_ACK) message shown in Table 8 to the BS 450 in step 417.

After being allocated the CID for one broadcast service and the Logical Channel IDs for the multiple content broadcasts up to step 417, the MS 400 can receive multiple broadcasts through one connection setup procedure.

Exemplary use of combinations of the CID and the Logical Channel IDs can be summarized as follows:
- CID: Logical Channel ID = Broadcast Service Provider: Content Broadcast ID in Broadcast Service

The exemplary use means that it uses a Multicast CID or a Transport CID to identify a service provider that provides a corresponding broadcast service and uses Logical Channel IDs to identify multiple content broadcasts provided in the corresponding broadcast service. Therefore, MSs can dynamically select multiple content broadcasts provided by the broadcast service provider with a single connection setup procedure.

When the number of content broadcasts provided by the corresponding broadcast service provider exceeds 256, which is the number of Logical Channel IDs, a BS can allocate multiple logical group IDs (possibly, Transport CIDs or Multicast CIDs) that it is aware of. This means that the MS should perform a DSA_REQ/RSP procedure several times. In this case, an MBS server should indicate a logical group unit having a maximum of 256 broadcast services in an MBS broadcast service list that the MS receives, and provides the MBS broadcast service list so that the MS may recognize that it should perform the DSA_REQ/RSP procedure several times. The MS performs the DSA_REQ/RSP procedure as many times as the logical group information.

For example, the MBS broadcast service list can include therein Logical Channel IDs of 0 - 255 for a logical group ID # 1 and logical channel IDs of 256 - 511 for a logical group ID #2. Therefore, when the MS requests the contents mapped to Logical Channel IDs 1, 200 and 255, it can perform connection setup with one DSA_REQ message transmission. However, when the MS requests the contents mapped to Logical Channel IDs 200 and 500, it can perform connection setup with two DSA_REQ message transmissions.

It is most preferable to extend the possible number of broadcast services mapped to one CID, i.e., one logical group ID. That is, if it is assumed that the total number of contents provided with one CID is 65536, it is preferable to extend a range of the Logical Channel IDs to 0 - 65535. This means that a Length field should be extended to 2 bytes in length.
- Multicast CID: Logical Channel ID == Broadcast Service Providing Group ID: Broadcast Service Provider

The exemplary use shows a solution for the case where the number of providers providing broadcast services in one MBS zone exceeds 95. In other words, in the case where the number of Multicast CIDs is 95 whereas the number of broadcast service providers in one MBS zone exceeds 95, the Multicast CIDs are used as IDs of broadcast service providing groups and the Logical Channel IDs replace the Multicast CIDs.

For example, broadcast service providers having Multicast CID values of 0 ∼ 94 have a broadcast service providing group ID '0', and the Multicast CID values of 0 ∼ 94 are replaced with Logical Channel ID values. In addition, broadcast service providers mapped to Multicast CID values of 95 - 189 have a broadcast service providing group ID '1', and the Multicast CID values of 95 ∼ 189 are replaced with Logical Channel ID values.

That is, broadcast service providing group ID: broadcast service provider = 0:94 means a broadcast service provider having the existing Multicast CID value of 94.

In addition, broadcast service providing group ID: broadcast service provider = 1:94 means a 189^{th} broadcast service provider newly added to the MBS zone.

Herein, the broadcast service providing group ID can be extended up to 95, which is the number of Multicast CIDs. That is, the broadcast service providing group ID has a value ranging from 0 ∼ 94.

If multiple broadcast connections are set up between an MS and a BS through the DSA_REQ/RSP message exchange procedure, the MS can receive broadcast messages for the corresponding MBS connections. Therefore, a format of the MBS_DATA_IE is modified so that the MS may identify the broadcast services and the content broadcasts using the Logical Channel IDs. A format of the modified MBS_DATA_IE is shown in Table 15 below.

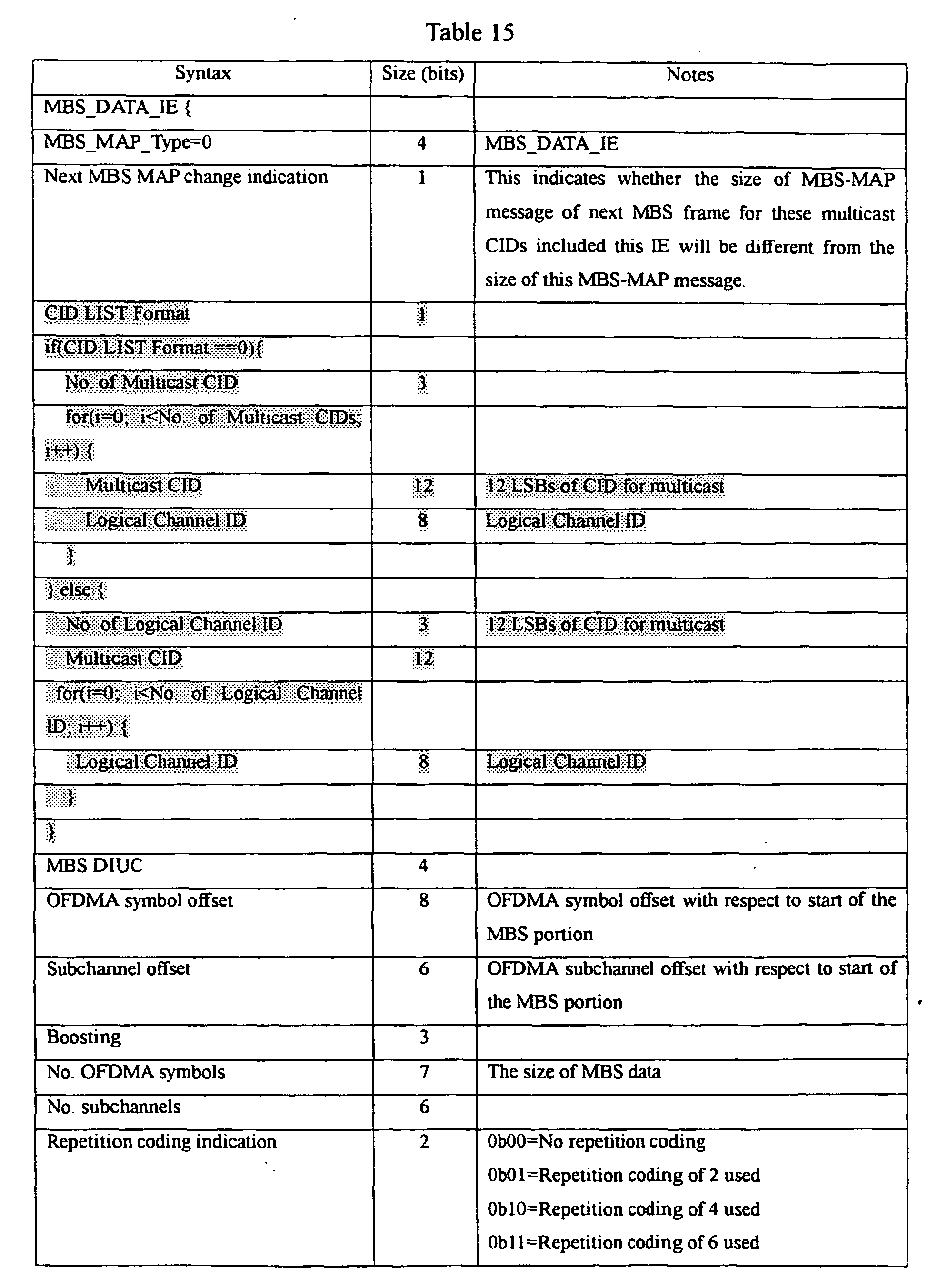

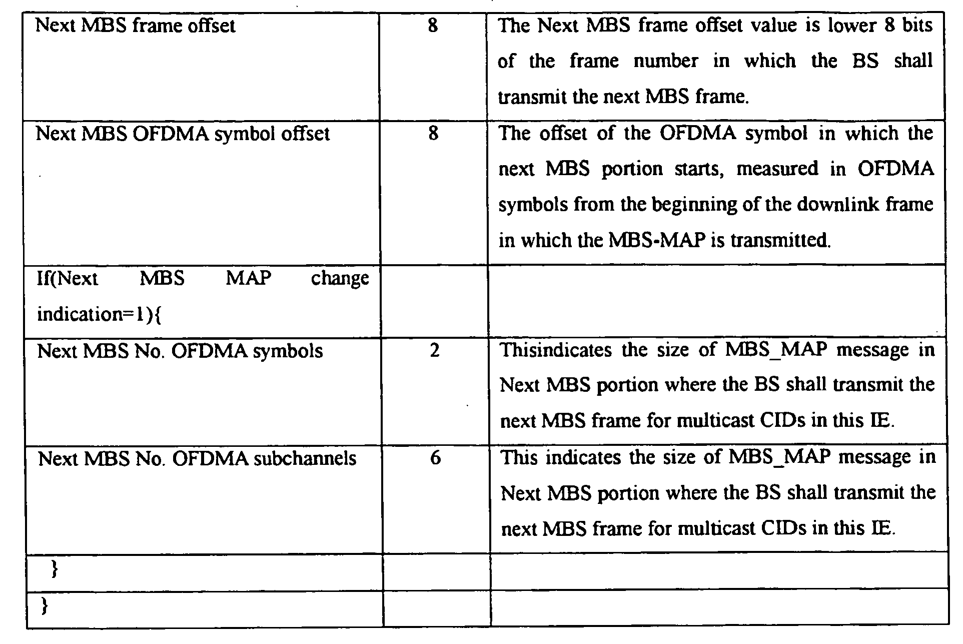

As shown in Table 15, the modified MBS_DATA_IE format indicates that logical channel IDs are newly added so that when an MBS Service is actually mapped to a frame, the MS can identify the corresponding broadcast service.

The present invention adds CID List Format parameters to the MBS_DATA_IE format in order to prevent the same Multicast CID from being repeatedly included when considering downlink bursts comprised of only the broadcast services having the same CID (or different Logical Channel IDs).

In the MBS_DATA_IE format, CID List Format=0 means that broadcast message CIDs in the MBS data burst indicated by the MBS_DATA_IE are not identical to each other. That is, because it means the presence of at least two broadcast message CIDs, multiple Multicast CIDs and multiple Logical Channel IDs are paired as shown in Table 13, making it possible to distinguish the allocation order of broadcast service messages. That is, the MS should recognize that broadcast messages are included in the MBS data burst indicated by the MBS_DATA_IE in the order of Multicast CID::Logical Channel ID. Herein, the broadcast messages included in the MBS data burst have a Medium Access Control (MAC) format, and a CID field in a header field of the MAC frame includes a Multicast CID therein. In addition, as the present invention provides the Logical Channel IDs, broadcast messages are included in the MBS_DATA_IE in the order of Multicast CID::Logical Channel ID.

CID List Format=1 means that broadcast message CIDs in the MBS data burst indicated by the MBS_DATA_IE are all identical to each other. Accordingly, there is no need to repeatedly include the same Multicast CID, and it is possible to distinguish the broadcast service message allocation order with one Multicast CID and its associated multiple Logical Channel IDs. Multiple broadcast service messages for one Logical Channel ID may be included in one MBS data burst. It should be noted that in this situation, multiple Logical Channel IDs can be included in one MBS_DATA_IE.

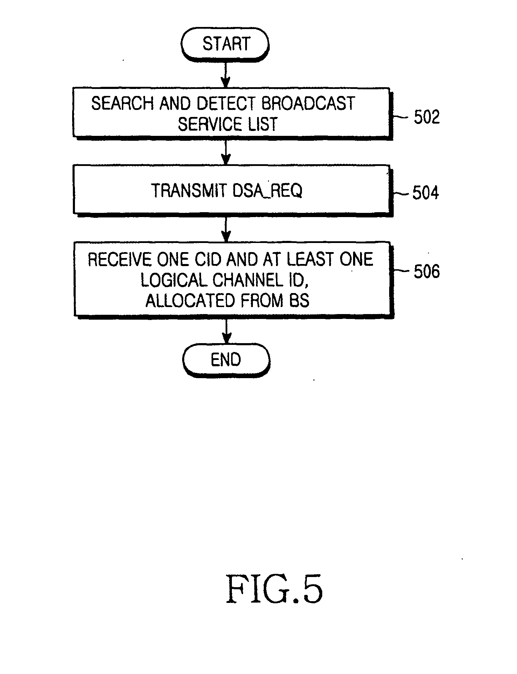

FIG. 5 is a flowchart illustrating a process of performing broadcast service connection setup by an MS according to the present invention.

Referring to FIG. 5, the MS searches and detects a broadcast service list provided from an MBS server in step 502. The MS transmits a DSA_REQ message to a BS in step 504. It is assumed herein that a TLV Encoded Information field of the DSA_REQ message includes therein an indication value indicating a Single-BS Broadcast Service connection request or a Multi-BS Broadcast Service connection request. For the DSA_REQ message, either of the conventional DSA_REQ message and the DSA_REQ message provided in the present invention can be used. The provided DSA_REQ message can be used for connection-requesting not only the corresponding broadcast service but also the contents provided in the broadcast service. In step 506, the MS is allocated, from the BS, a CID mapped to the requested broadcast service and at least one Logical Channel IDs mapped to the contents provided in the broadcast service. Herein, the CID mapped to the broadcast service is a Transport CID used in the Single-BS Broadcast Service or a Multicast CID used in the Multi-BS Broadcast Service.

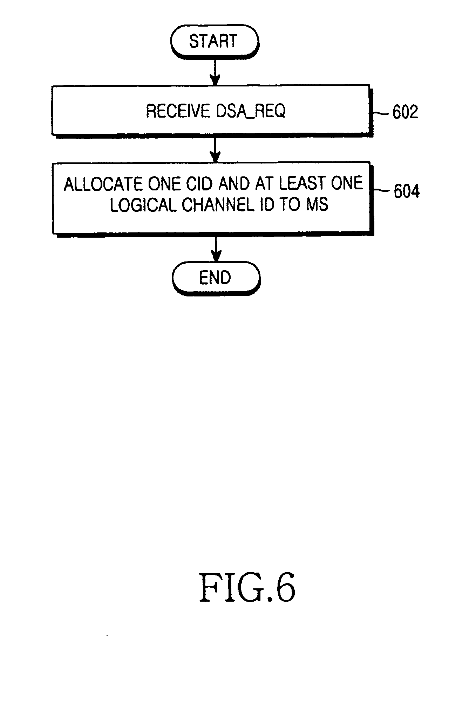

FIG. 6 is a flowchart illustrating a process of performing broadcast service connection setup by a BS according to the present invention.

Referring to FIG. 6, the BS receives from an MS a DSA_REQ message including an indication value indicating a Single-BS Broadcast Service connection request or a Multi-BS Broadcast Service connection request in step 602. For the DSA_REQ message, either of the conventional DSA_REQ message and the DSA_REQ message provided in the present invention can be used. The provided DSA_REQ message can be used for connection-requesting not only the corresponding broadcast service but also the contents provided in the broadcast service. In step 604, the BS allocates, to the MS, a CID mapped to the requested broadcast service and at least one Logical Channel IDs mapped to the contents provided in the broadcast service. Herein, the CID is a Transport CID or a Multicast CID.

A second embodiment of the present invention provides a scheme whereby when an MS transmits the conventional DSA_REQ message to a BS, the BS performs broadcast service connection.

The conventional DSA_REQ message can be used only for connection-requesting the Single-BS Broadcast Service. Therefore, in the second embodiment of the present invention, upon receiving the conventional DSA_REQ message from an MS, a BS includes connection information, i.e., an MBS Contents ID, for at least one broadcast service provided in its MBS zone in a DSA_RSP message, and transmits the DSA_RSP message to the MS in response to the received DSA_REQ message.

Therefore, the format shown in Table 16 below should be included in TLV Encoded Information fields of the DSA_RSP message and a DSA_ACK message. Table 16 shows a format of MBS Contents ID parameters.

**Table 16**

| Type | Length | Value | Scope |
|---|---|---|---|
| | | MBS Contents ID(0), | |
| [145.146].y | N*2 | MBS Contents ID(1),....., | DSx-RSP, DSx-ACK |
| | | MBS Contents ID(n-1) | |

The MBS Contents ID parameters shown in Table 16 have a TLV Encoding format, and include therein IDs of broadcast services (or broadcast channels) provided from the BS to the MS that requested the broadcast services. If the number of the MBS Contents IDs is N, the total length of all the MBS Contents IDs is 2*N because a length of one MBS Contents ID is 2 bytes.The length of the MBS Contents ID is subject to change according to its implementation. The value included in the MBS Contents ID should be discussed in an upper layer of a MAC layer, so it is not directly related to the present invention.

Upon receiving the DSA_RSP message including the MBS Contents ID, the MS should grasp an allocation relation of Logical Channel IDs being different in concept from the Logical Channel IDs shown in Table 14. That is, the Logical Channel IDs can also be allocated from a value 0 in the order of the MBS Contents IDs included in the DSA_RSP message. For example, in a Value field of Table 16, a Logical Channel ID '0' is allocated to a first MBS Contents ID (i.e., MBS Contents ID(0)), a Logical Channel ID '1' is allocated to a second MBS Contents ID (i.e., MBS Contents ID(1)), and a Logical Channel ID 'N' is allocated to an N^{th} MBS Contents ID (i.e., MBS Contents ID(N-1)). The MBS Contents ID TLV of Table 16 may be used even for the case where the MS issues a request for multiple broadcast services using the proposed DSA_REQ message capable of requesting multiple broadcast services.

Alternatively, a BS may request MBS connection by transmitting a DSA_REQ message to an MS. Therefore, the BS can transmit the MBS Contents ID TVL provided in the second embodiment of the present invention to the MS along with the DSA_REQ message. For reference, the DSA_REQ message includes one CID therein.

A third embodiment of the present invention provides an MBS_DATA_IE format different from the MBS_DATA_IE format of Table 15. When an MS recognizes a broadcast service granted thereto according to the first embodiment or the second embodiment, a BS transmits an MBS_DATA_IE shown in Table 17 below to the MS along with a downlink frame.

**Table 17**

| Syntax | Size(bits) | Notes |
|---|---|---|
| MBS_DATA_IE { | | |
| MBS_MAP_Type = 0 | 4 | MBS_DATA_IE |
| Next MBS MAP change indication | 1 | This indicates whether the size of MBS MAP message of next MBS frame for these multicast CIDs included this IE will be different from the size of this MBS MAP message. |
| No. of Multicast CID | 3 | |
| for(i=0; i<No. of Multicast CIDs;i++) { | | |
| Multicast CID | 12 | 12 LSBs of CID for multicast |
| No. of Logical Cahnnel ID | 3 | 12 LSBs of CID for multicast |
| for(i=0; i<No. of Logical Cahnnel ID;i++) { | | |
| Logical Channel ID | 8 | Logical Channel ID |
| } | | |
| } | | |
| MBS DIUC | 4 | |
| OFDMA symbol offset | 8 | OFDMA symbol offset with respect to start of the MBS portion |
| Subchannel offset | 6 | OFDMA subchannel offset with respect to start of the MBS portion |
| Boosting | 3 | |
| No. OFDMA symbols | 7 | The size of MBS data |
| No. subchannels | 6 | |
| Repetition coding indication | 2 | 0b00 = No repetition coding |
| | | 0b01 = Repetition coding of 2 used |
| | | 0b10 = Repetition coding of 4 used |
| | | 0b11 = Repetition coding of 6 used |
| Next MBS frame offset | 8 | The Next MBS frame offset value is lower 8 bits of the frame number in which the BS shall transmit the next MHS frame. |
| Next MBS OFDMA symbol offset | 8 | The offset of the OFDMA symbol in which the next MBS portion starts, measured in OFDMA symbols from the beginning of the downlink frame in which the MBS-MAP is transmitted. |
| If(Next MBS MAP change indication = 1){ | | |
| Next MBS No. OFDMA symbols | 2 | This indicates the size of MBS_MAP message in Next MBS portion where the BS shall transmit the next MBS frame for multicast CIDs in this IE. |
| Next MBS No. OFDMA subchannels | 6 | This indicates the size of MBS_MAP message in Next MBS portion where the BS shall transmit the next MBS frame for multicast CIDs in this IE. |
| } | | |
| } | | |

As shown in Table 17, the MBS_DATA_IE format indicates that when broadcast services are mapped to downlink frames, the Logical Channel IDs are allocated according to Multicast CIDs. The MS should previously recognize that broadcast messages mapped to Multicast CID::Logical Channel ID are sequentially included in an MBS data burst field of the downlink frame. This is possible as the MS reads the MBS_DATA_IE. Herein, the broadcast messages included in the MBS data burst field have a MAC frame format, and a Multicast CID is included in a CID field of a MAC frame header field.

The broadcast messages mapped to the Multicast CID::Logical Channel CID may be sequentially included in the MBS data burst field of the downlink frame. However, the broadcast messages mapped to the Multicast CID::Logical Channel CID may not be sequentially included in the MBS data burst field. In this case, Logical Channel IDs are included in front of broadcast contents included in the broadcast messages in the MBS data burst field.

Allocating broadcast messages to the MBS data burst field of the broadcast downlink frame in the order of the Multicast CID::Logical Channel ID or regardless of the order is related to whether to include the Logical Channel IDs in the broadcast contents in the broadcast messages.

A fourth embodiment of the present invention provides a modified MBS MAP message format. When the MS recognizes a broadcast service granted thereto, i.e., when the MS recognizes a Logical Channel ID, the BS uses a modified MBS MAP message to which both of the conventional MBS_DATA_IE and the provided MBS_DATA_IE can be applied, in providing the broadcast service to the MS. A format of the modified MBS MAP message is shown in Table 18 below.

**Table 18**

| Syntax | Size (bits) | Notes |
|---|---|---|
| MBS-MAP Message format ( ) { | | |
| MAC Generic Header | 48 | 6bytes |
| Management message type=62 | 4 | |
| Frame number | 4 | The frame number is identical to the frame number in the DL-MAP |
| MBS_DIUC_Change_Count | 8 | |
| #MBS_DATA_IE | 4 | Number of included MBS_DATA_IE |
| For(i=0;i<n; i++) { | | n = #MBS_DATA_IE |
| MBS_DATA_IE | Variable | |
| } | | |
| #MBS_DATA_IE with Logical Channel ID | 4 | Number of included MBS_DATA_IE with Logical channel ID |
| For(i=0; i< p; I ++) { | | p = #MBS_DATA_IE with Logical Channel ID |
| MBS_DATA_IE with Logical Channel ID | Variable | |
| } | | |
| #MBS_DATA_Time_Diversity_IE | 4 | Number of included MBS_DATA_Time_Diversity_IE |
| For(i=0;i<m; i++) { | | m = #MBS_DATA_Time_Diversity_IE |
| MBS_DATA_Time_Diversity_IE | Variable | |
| } | | |
| If(!byte boundary) { | | |
| Padding nibble | 8 | |
| } | | |
| TLV encoding element | | |
| } | | |

The MBS MAP message newly proposed in the present invention has a format determined by adding a '#MBS_DATA_IE with Logical Channel ID' field to the conventional MBS MAP message. The MS makes reference to the conventional MBS_DATA_IE for the broadcast service recognized by the DSA_RSP message including only the Multicast CID. However, the MS, receiving a DSA_RSP message including the Logical Channel IDs as well as the Multicast CID, makes reference to the MBS_DATA_IE provided in the first embodiment or the third embodiment. If, in Table 18, the '#MBS_DATA_IE with Logical Channel ID' field indicating the number of Logical Channel IDs has a value of '0', it means that there is no MBS_DATA_IE with Logical Channel ID in the MBS MAP message.

As can be understood from the foregoing description, during MBS connection between a BS and an MS, the present invention establishes multiple broadcast service connections, contributing to the minimization of resource consumption and time delay. In addition, the present invention newly provides Logical Channel IDs, thereby facilitating allocation of IDs for multiple content broadcasts and contributing to the extension of the limited number of Multicast CIDs.

While the invention has been shown and described with reference to a certain preferred embodiment thereof, it will be understood by those skilled in the art that various changes in form and details may be made therein without departing from the scope of the invention as defined by the appended claims.

## Claims

1. A broadcast service connection setup method for receiving a Multicast and Broadcast Service, MBS, by a mobile station, MS, in a mobile communication system supporting the MBS, the method comprising :
sending a connection setup request for a particular broadcast service to a base station, BS, and
receiving an allocation message comprising a first identifier mapped to the particular broadcast service and second identifiers individually mapped to at least one content broadcast, the first and second identifiers being allocated from the BS.

2. The broadcast service connection setup method of claim 1, wherein the connection setup request is included in a Type/Length/Value, TLV, Encoded Information field of a Dynamic Service Addition_REQuest, DSA_REQ, message.

3. The broadcast service connection setup method of claim 1, wherein the first identifier is a Transport Connection Identifier, CID, for identifying a broadcast service which is uniquely broadcast in one cell.

4. The broadcast service connection setup method of claim 1, wherein the first identifier is a Multicast CID for identifying broadcast services commonly broadcast in a predetermined number of cells.

5. The broadcast service connection setup method of claim 1, wherein combination values obtained by a combination of the first identifier and the second identifiers are allocated as third identifiers which are mapped to the each content broadcast on a one-to-one basis.

6. The broadcast service connection setup method of claim 1, wherein a combination value obtained by a combination of the first identifier and the second identifiers is allocated as a fourth identifier mapped to the particular broadcast service.

7. The broadcast service connection setup method of claim 1, wherein the second identifier is an MBS contents ID mapped to the at least one content broadcast.

8. The broadcast service connection setup method of claim 1, wherein the second identifier is a logical channel identifier allocated to content broadcasts.

9. The broadcast service connection setup method of claim 8, wherein the logical channel identifier is used to distinguish the second identifier which belong to the same first identifier.

10. A broadcast service connection setup method for providing by a base station, BS, a Multicast and Broadcast Service, MBS, to a mobile station, MS, in amobile communication system supporting the MBS, the method comprising :
receiving a connection setup request for a particular broadcast service from the MS; and
transmitting an allocation message comprising a first identifier mapped to the particular broadcast service and second identifiers individually mapped to at least one content broadcast, to the MS.

11. The broadcast service connection setup method of claim 10, wherein the identifiers are included in a Type/Length/Value, TLV, Encoded Information field of a Dynamic Service Addition_ReSPonse, DSA_RSP, message.

12. The broadcast service connection setup method of claim 10, wherein the first identifier is a Transport Connection Identifier, CID.

13. The broadcast service connection setup method of claim 10, wherein the first identifier is a Multicast CID.

14. The broadcast service connection setup method of claim 10, wherein combination values obtained by a combination of the first identifier and the second identifiers are allocated as third identifiers which are mapped to the each content broadcast on a one-to-one basis.

15. The broadcast service connection setup method of claim 10, wherein a combination value obtained by the combination of the first identifier and the second identifier is allocated as a fourth identifier mapped to the particular broadcast service.

16. The broadcast service connection setup method of claim 14, wherein information indicating location and size of MBS data obtained through an allocation of the first identifier and the second identifier, or the third identifier, or the fourth identifier is included in a particular field of an MBS MAP message of a downlink frame before being transmitted.

17. The broadcast service connection setup method of claim 16, wherein the MBS MAP message includes information indicating the number of information pieces indicating location and size of MBS data having the second identifier.

18. The broadcast service connection setup method of claim 16, wherein the MBS MAP message includes information on the first identifier and the second identifier.

19. The broadcast service connection setup method of claim 16, wherein the information indicating location and size of MBS data is represented by the first identifier and the second identifier.

20. The broadcast service connection setup method of claim 10, wherein the second identifier is an MBS contents ID mapped to the at least one content broadcast.

21. The broadcast service connection setup method of claim 11, wherein the second identifier is a logical channel identifier allocated to content broadcasts.

22. The broadcast service connection setup method of claim 21, wherein the logical channel identifier is used to distinguish the second identifier which belong to the same first identifier.

23. A broadcast service connection setup system for providing a Multicast and Broadcast Service, MBS, in a mobile communication system supporting the MBS, the system comprising:
a mobile station, MS, for sending a connection setup request for a particular broadcast service and multiple content broadcasts and receiving an allocation message comprising a first identifier mapped to the particular broadcast service; and
a base station, BS, for transmitting an allocation message comprising the first identifier mapped to the particular broadcast service and second identifiers mapped to at least one content broadcast upon receiving the connection setup request for the particular broadcast service and the multiple content broadcasts provided in the particular broadcast service.

24. The broadcast service connection setup system of claim 23, wherein the MS is adapted to include a connection setup request for the multiple content broadcasts in a Type/Length/Value, TLV, Encoded Information field of a Dynamic Service Addition_REQuest, DSA_REQ, message before transmission.

25. The broadcast service connection setup system of claim 23, wherein the BS is adapted to include the identifiers in a TLV Encoded Information field of a Dynamic Service Addition_ReSPonse, DSA_RSP, message before allocation.

26. The broadcast service connection setup system of claim 23, wherein the first identifier is a Transport Connection Identifier, CID.

27. The broadcast service connection setup system of claim 23, wherein the first identifier is a Multicast CID.

28. The broadcast service connection setup system of claim 23, wherein the BS is adapted to allocate combination values obtained by a combination of the first identifier and the second identifiers as third identifiers which are mapped to the multiple content broadcasts on a one-to-one basis.

29. The broadcast service connection setup system of claim 23, wherein the BS is adapted to allocate a combination value obtained by a combination of the first identifier and the second identifiers as a fourth identifier mapped to the particular broadcast service.

30. The broadcast service connection setup system of claim 29, wherein the BS is adapted to include information indicating location and size of MBS data in an MBS data information element of an MBS MAP message of a downlink frame before transmission.

31. The broadcast service connection setup system of claim 30, wherein the MBS MAP message includes information indicating a number of information pieces indicating location and size of MBS data having the second identifier.

32. The broadcast service connection setup system of claim 30, wherein the information indicating location and size of MBS data is represented by the first identifier and the second identifier.

33. The broadcast service connection setup system of claim 32, wherein the MBS data is sequentially included in an MBS data burst field of a downlink frame based on the information represented by the first identifier and the second identifier.

34. The broadcast service connection setup system of claim 32, wherein the MBS data is randomly included in an MBS data burst field of a downlink frame regardless of the information represented by the first identifier and the second identifier.

35. The broadcast service connection setup system of claim 34, wherein the MBS data is identified by a logical channel identifier included in the MBS MAP message.

36. The broadcast service connection setup system of claim 23, wherein the second identifier is an MBS contents ID mapped to the at least one content broadcast.

37. The broadcast service connection setup system of claim 23, wherein the second identifier is a logical channel identifier allocated to content broadcasts.

38. The broadcast service connection setup system of claim 37, wherein the logical channel identifier is used to distinguish the second identifier which belong to the same first identifier.

## Patentansprüche

1. Rundsendedienstverbindungsherstellungsverfahren zum Empfangen eines MBS (Multicast and Broadcast Service MBS, Mehrzielsende- und Rundsendedienst) durch eine Mobilstation MS in einem MBS unterstützenden Mobilkommunikationssystem, wobei das Verfahren umfasst:
Senden einer Verbindungsherstellungsanforderung für einen bestimmten Rundsendedienst an eine Basisstation BS; und
Empfangen einer Zuteilungsnachricht, die eine erste Kennung, die auf den bestimmten Rundsendedienst verweist, und zweite Kennungen, die einzeln auf wenigstens eine Inhaltsrundsendung verweisen, umfasst, wobei die ersten und zweiten Kennungen von der Basisstation zugeteilt werden.

2. Rundsendedienstverbindungsherstellungsverfahren nach Anspruch 1, wobei die Verbindungsherstellungsanforderung in einem codierten TLV-Informationsfeld (Type/Length/Value TLV, Typ/Länge/Wert) einer DSA_REQ-Nachricht (Dynamic Service Addition_REQuest DSA_REQ, dynamische Diensthinzunahmeanforderung) beinhaltet ist.

3. Rundsendedienstverbindungsherstellungsverfahren nach Anspruch 1, wobei die erste Kennung eine CID (Transport Connection Identifier CID, Transportverbindungskennung) zum Identifizieren eines Rundsendedienstes ist, der einzig in einer Zelle rundgesendet wird.

4. Rundsendedienstverbindungsherstellungsverfahren nach Anspruch 1, wobei die erste Kennung eine Mehrzielsende-CID (Multicast CID) zum Identifizieren von Rundsendediensten ist, die gemeinsam in einer vorbestimmten Anzahl von Zellen rundgesendet werden.

5. Rundsendedienstverbindungsherstellungsverfahren nach Anspruch 1, wobei Kombinationswerte aus der Ermittlung durch Kombinieren der ersten Kennung und der zweiten Kennungen als dritte Kennungen zugeteilt werden, die auf jede Inhaltsrundsendung eindeutig verweisen.

6. Rundsendedienstverbindungsherstellungsverfahren nach Anspruch 1, wobei ein Kombinationswert aus der Ermittlung durch Kombinieren der ersten Kennung und der zweiten Kennungen als vierte Kennung zugeteilt wird, die auf den bestimmten Rundsendedienst verweist.

7. Rundsendedienstverbindungsherstellungsverfahren nach Anspruch 1, wobei die zweite Kennung eine MBS-Inhaltekennung (MBS contents ID) ist, die auf die wenigstens eine Inhaltsrundsendung verweist.

8. Rundsendedienstverbindungsherstellungsverfahren nach Anspruch 1, wobei die zweite Kennung eine logische Kanalkennung ist, die Inhaltsrundsendungen zugeteilt ist.

9. Rundsendedienstverbindungsherstellungsverfahren nach Anspruch 8, wobei die logische Kanalkennung verwendet wird, um die zweite Kennung zu unterscheiden, die zu derselben ersten Kennung gehören.

10. Rundsendedienstverbindungsherstellungsverfahren zum durch eine Basisstation BS erfolgenden Bereitstellen eines MBS (Multicast and Broadcast Service MBS, Mehrzielsende- und Rundsendedienst) für eine Mobilstation MS in einem MBS unterstützenden Mobilkommunikationssystem, wobei das Verfahren umfasst:
Empfangen einer Verbindungsherstellungsanforderung für einen bestimmten Rundsendedienst von der Mobilstation MS; und
an die Mobilstation MS erfolgendes Übertragen einer Zuteilungsnachricht, die eine erste Kennung, die auf den bestimmten Rundsendedienst verweist, und zweite Kennungen, die einzeln auf wenigstens eine Inhaltsrundsendung verweisen, umfasst.

11. Rundsendedienstverbindungsherstellungsverfahren nach Anspruch 10, wobei die Kennungen in einem codierten TLV-Informationsfeld (Type/Length/Value TLV, Typ/Länge/Wert) einer DSA_RSP-Nachricht (Dynamic Service Addition_ReSPonse DSA_RSP, dynamische Diensthinzunahmeantwort) beinhaltet sind.

12. Rundsendedienstverbindungsherstellungsverfahren nach Anspruch 10, wobei die erste Kennung eine CID (Transport Connection Identifier CID, Transportverbindungskennung) ist.

13. Rundsendedienstverbindungsherstellungsverfahren nach Anspruch 10, wobei die erste Kennung eine Mehrzielsende-CID (Multicast CID) ist.

14. Rundsendedienstverbindungsherstellungsverfahren nach Anspruch 10, wobei Kombinationswerte aus der Ermittlung durch Kombinieren der ersten Kennung und der zweiten Kennungen als dritte Kennungen zugeteilt werden, die auf jede Inhaltsrundsendung eindeutig verweisen.

15. Rundsendedienstverbindungsherstellungsverfahren nach Anspruch 10, wobei ein Kombinationswert aus der Ermittlung durch Kombinieren der ersten Kennung und der zweiten Kennung als vierte Kennung zugeteilt wird, die auf den bestimmten Rundsendedienst verweist.

16. Rundsendedienstverbindungsherstellungsverfahren nach Anspruch 14, wobei Information zur Angabe von Ort und Größe von MBS-Daten aus der Ermittlung durch eine Zuteilung der ersten Kennung und der zweiten Kennung oder der dritten Kennung oder der vierten Kennung in einem bestimmten Feld einer MBS-MAP-Nachricht eines Downlinkframe vor dem Übertragen beinhaltet ist.

17. Rundsendedienstverbindungsherstellungsverfahren nach Anspruch 16, wobei die MBS-MAP-Nachricht Information zur Angabe der Anzahl von Informationsteilen zur Angabe von Ort und Größe von MBS-Daten mit der zweiten Kennung beinhaltet.

18. Rundsendedienstverbindungsherstellungsverfahren nach Anspruch 16, wobei die MBS-MAP-Nachricht Information über die erste Kennung und die zweite Kennung beinhaltet.

19. Rundsendedienstverbindungsherstellungsverfahren nach Anspruch 16, wobei die Information zur Angabe von Ort und Größe von MBS-Daten durch die erste Kennung und die zweite Kennung dargestellt wird.

20. Rundsendedienstverbindungsherstellungsverfahren nach Anspruch 10, wobei die zweite Kennung eine MBS-Inhaltekennung (MBS contents ID) ist, die auf die wenigstens eine Inhaltsrundsendung verweist.

21. Rundsendedienstverbindungsherstellungsverfahren nach Anspruch 11, wobei die zweite Kennung eine logische Kanalkennung ist, die Inhaltsrundsendungen zugeteilt ist.

22. Rundsendedienstverbindungsherstellungsverfahren nach Anspruch 21, wobei die logische Kanalkennung verwendet wird, um die zweite Kennung zu unterscheiden, die zu derselben ersten Kennung gehören.

23. Rundsendedienstverbindungsherstellungssystem zum Bereitstellen eines MBS (Multicast and Broadcast Service MBS, Mehrzielsende- und Rundsendedienst) in einem MBS unterstützenden Mobilkommunikationssystem, wobei das System umfasst:
eine Mobilstation MS zum Senden einer Verbindungsherstellungsanforderung für einen bestimmten Rundsendedienst und mehrere Inhaltsrundsendungen und Empfangen einer Zuteilungsnachricht, die eine erste Kennung umfasst, die auf den bestimmten Rundsendedienst verweist; und
eine Basisstation BS zum Übermitteln einer Zuteilungsnachricht, die die erste Kennung, die auf den bestimmten Rundsendedienst verweist, und zweite Kennungen, die auf wenigstens eine Inhaltsrundsendung verweisen, umfasst, beim Empfangen der Verbindungsherstellungsanforderung für den bestimmten Rundsendedienst und
die mehreren Inhaltsrundsendungen aus der Bereitstellung in dem bestimmten Rundsendedienst.

24. Rundsendedienstverbindungsherstellungssystem nach Anspruch 23, wobei die Mobilstation MS dafür ausgelegt ist, eine Verbindungsherstellungsanforderung für die mehreren Inhaltsrundsendungen in einem codierten TLV-Informationsfeld (Type/Length/Value TLV, Typ/Länge/Wert) einer DSA_REQ-Nachricht (Dynamic Service Addition_REQuest DSA_REQ, dynamische Diensthinzunahmeanforderung) vor der Übermittlung zu beinhalten.

25. Rundsendedienstverbindungsherstellungssystem nach Anspruch 23, wobei die Basisstation BS dafür ausgelegt ist, die Kennungen in einem codierten TLV-Informationsfeld einer DSA_RSP-Nachricht (Dynamic Service Addition_ReSPonse DSA_RSP, dynamische Diensthinzunahmeantwort) vor der Zuteilung zu beinhalten.

26. Rundsendedienstverbindungsherstellungssystem nach Anspruch 23, wobei die erste Kennung eine CID (Transport Connection Identifier CID, Transportverbindungskennung) ist.

27. Rundsendedienstverbindungsherstellungssystem nach Anspruch 23, wobei die erste Kennung eine Mehrzielsende-CID (Multicast CID) ist.

28. Rundsendedienstverbindungsherstellungssystem nach Anspruch 23, wobei die Basisstation BS dafür ausgelegt ist, Kombinationswerte aus der Ermittlung durch Kombinieren der ersten Kennung und der zweiten Kennungen als dritte Kennungen zuzuteilen, die auf die mehreren Inhaltsrundsendungen eindeutig verweisen.

29. Rundsendedienstverbindungsherstellungssystem nach Anspruch 23, wobei die Basisstation BS dafür ausgelegt ist, einen Kombinationswert aus der Ermittlung durch Kombinieren der ersten Kennung und der zweiten Kennungen als vierte Kennung zuzuteilen, die auf den bestimmten Rundsendedienst verweist.

30. Rundsendedienstverbindungsherstellungssystem nach Anspruch 29, wobei die Basisstation BS dafür ausgelegt ist, Information zur Angabe von Ort und Größe von MBS-Daten in einem MBS-Dateninformationselement einer MBS-MAP-Nachricht eines Downlinkframe vor der Übermittlung zu beinhalten.

31. Rundsendedienstverbindungsherstellungssystem nach Anspruch 30, wobei die MBS-MAP-Nachricht Information zur Angabe einer Anzahl von Informationsteilen zur Angabe von Ort und Größe von MBS-Daten mit der zweiten Kennung beinhaltet.

32. Rundsendedienstverbindungsherstellungssystem nach Anspruch 30, wobei die Information zur Angabe von Ort und Größe von MBS-Daten durch die erste Kennung und die zweite Kennung dargestellt wird.

33. Rundsendedienstverbindungsherstellungssystem nach Anspruch 32, wobei die MBS-Daten sequenziell in einem MBS-Datenburstfeld eines Downlinkframe auf Grundlage der durch die erste Kennung und die zweite Kennung dargestellten Information beinhaltet sind.

34. Rundsendedienstverbindungsherstellungssystem nach Anspruch 32, wobei die MBS-Daten willkürlich in einem MBS-Datenburstfeld eines Downlinkframe unabhängig von der durch die erste Kennung und die zweite Kennung dargestellten Information beinhaltet sind.

35. Rundsendedienstverbindungsherstellungssystem nach Anspruch 34, wobei die MBS-Daten durch eine logische Kanalkennung identifiziert werden, die in der MBS-MAP-Nachricht beinhaltet ist.

36. Rundsendedienstverbindungsherstellungssystem nach Anspruch 23, wobei die zweite Kennung eine MBS-Inhaitekennung (MBS contents ID) ist, die auf die wenigstens eine Inhaltsrundsendung verweist.

37. Rundsendedienstverbindungsherstellungssystem nach Anspruch 23, wobei die zweite Kennung eine logische Kanalkennung ist, die Inhaltsrundsendungen zugeteilt ist.

38. Rundsendedienstverbindungsherstellungssystem nach Anspruch 37, wobei die logische Kanalkennung verwendet wird, um die zweite Kennung zu unterscheiden, die zu derselben ersten Kennung gehören.

## Revendications

1. Procédé de configuration de connexion pour services de diffusion pour recevoir un Service de Multidiffusion et de Diffusion, MBS (Multicast and Broadcast Service), sur une station mobile, MS (Mobile Station), dans un système de communication mobile prenant en charge le MBS, le procédé consistant à :
envoyer une demande d'établissement de connexion pour un service de diffusion particulier à une station de base, BS (Base Station), et
recevoir un message d'allocation comprenant un premier identificateur mis en correspondance avec le service de diffusion particulier et des seconds identificateurs individuellement mis en correspondance avec au moins une diffusion de contenu, les premier et second identificateurs étant alloués à la BS.

2. Procédé d'établissement de connexion pour services de diffusion selon la revendication 1, dans lequel la demande d'établissement de connexion est contenue dans un champ d'Informations Codées de Type/Longueur/Valeur, TLV, d'un message de Demande d'Ajout de Service Dynamique, DSA_REQ (Dynamic Service Addition_REQuest).

3. Procédé d'établissement de connexion pour services de diffusion selon la revendication 1, dans lequel le premier identificateur est un Identificateur de Connexion de Transport, CID, destiné à identifier un service de diffusion qui est diffusé de façon unique dans une cellule.

4. Procédé d'établissement de connexion pour services de diffusion selon la revendication 1, dans lequel le premier identificateur est un CID de Multidiffusion destiné à identifier des services de diffusion diffusés en commun dans un nombre prédéterminé de cellules.

5. Procédé d'établissement de connexion pour services de diffusion selon la revendication 1, dans lequel des valeurs de combinaison obtenues par une combinaison du premier identificateur et des seconds identificateurs sont allouées en tant que troisièmes identificateurs qui sont mis en correspondance de façon biunivoque avec chaque diffusion de contenu.

6. Procédé d'établissement de connexion pour services de diffusion selon la revendication 1, dans lequel une valeur de combinaison obtenue par une combinaison du premier identificateur et des seconds identificateurs est allouée en tant que quatrième identificateur mis en correspondance avec le service de diffusion particulier.

7. Procédé d'établissement de connexion pour services de diffusion selon la revendication 1, dans lequel le second identificateur est un ID de contenus MBS mis en correspondance avec l'au moins une diffusion de contenu.

8. Procédé d'établissement de connexion pour services de diffusion selon la revendication 1, dans lequel le second identificateur est un identificateur de canal logique alloué à des diffusions de contenus.

9. Procédé d'établissement de connexion pour services de diffusion selon la revendication 8, dans lequel l'identificateur de canal logique est utilisé pour distinguer le second identificateur qui appartient au même premier identificateur.

10. Procédé d'établissement de connexion pour services de diffusion destiné à fournir à partir d'une station de base, BS, un Service de Multidiffusion et de Diffusion, MBS, à une station mobile, MS, dans un système de communication prenant en charge le MBS, le procédé consistant à :
recevoir de la MS une demande d'établissement de connexion pour un service de diffusion particulier ; et
transmettre à la MS un message d'allocation comprenant un premier identificateur mis en correspondance avec le service de diffusion particulier et des seconds identificateurs individuellement mis en correspondance avec au moins une diffusion de contenu.

11. Procédé d'établissement de connexion pour services de diffusion selon la revendication 10, dans lequel les identificateurs sont contenus dans un champ d'Informations Codées de Type/Longueur/Valeur, TLV, d'un message de Réponse d'Ajout de Service Dynamique, DSA_RSP (Dynamic Service Addition_Response).

12. Procédé d'établissement de connexion pour services de diffusion selon la revendication 10, dans lequel le premier identificateur est un Identificateur de Connexion de Transport, CID.

13. Procédé d'établissement de connexion pour services de diffusion selon la revendication 10, dans lequel le premier identificateur est un CID de Multidiffusion.

14. Procédé d'établissement de connexion pour services de diffusion selon la revendication 10, dans lequel des valeurs de combinaison obtenues par une combinaison du premier identificateur et des seconds identificateurs sont allouées en tant que troisièmes identificateurs qui sont mis en correspondance de façon biunivoque avec chaque diffusion de contenu.

15. Procédé d'établissement de connexion pour services de diffusion selon la revendication 10, dans lequel une valeur de combinaison obtenue par une combinaison du premier identificateur et du second identificateur est allouée en tant que quatrième identificateur mis en correspondance avec un service de diffusion particulier.

16. Procédé d'établissement de connexion pour services de diffusion selon la revendication 14, dans lequel des informations indiquant la position et la taille de données MBS obtenues par une allocation du premier identificateur et du second identificateur, ou du troisième identificateur, ou du quatrième identificateur, sont contenues dans un champ particulier d'un message MBS MAP d'une trame de liaison descendante avant qu'elle soit transmise.

17. Procédé d'établissement de connexion pour services de diffusion selon la revendication 16, dans lequel le message MBS MAP contient des informations indiquant le nombre d'éléments d'informations représentatifs de la position et de la taille des données MBS ayant le second identificateur.

18. Procédé d'établissement de connexion pour services de diffusion selon la revendication 16, dans lequel le message MBS MAP contient des informations concernant le premier identificateur et le second identificateur.

19. Procédé d'établissement de connexion pour services de diffusion selon la revendication 16, dans lequel les informations indiquant la position et la taille des données MBS sont représentées par le premier identificateur et le second identificateur.

20. Procédé d'établissement de connexion pour services de diffusion selon la revendication 10, dans lequel le second identificateur est un ID de contenus MBS mis en correspondance avec l'au moins une diffusion de contenu.

21. Procédé d'établissement de connexion pour services de diffusion selon la revendication 11, dans lequel le second identificateur est un identificateur de canal logique alloué à des diffusions de contenus.

22. Procédé d'établissement de connexion pour services de diffusion selon la revendication 21, dans lequel l'identificateur de canal logique est utilisé pour distinguer le second identificateur qui appartient à un même premier identificateur.

23. Système d'établissement de connexion pour services de diffusion destiné à fournir un Service de Diffusion et de Multidiffusion, MBS, dans un système de communication mobile prenant en charge le MBS, le système comprenant :
une station mobile, MS, pour envoyer une demande d'établissement de connexion pour un service de diffusion particulier et des diffusions de contenus multiples et recevoir un message d'allocation comprenant un premier identificateur mis en correspondance avec le service de diffusion particulier ; et
une station de base, BS, pour transmettre un message d'allocation comprenant le premier identificateur mis en correspondance avec le service de diffusion particulier et des seconds identificateurs mis en correspondance avec au moins une diffusion de contenu lors de la réception de la demande d'établissement de connexion pour le service de diffusion particulier et les diffusions de contenus multiples fournies dans le service de diffusion particulier.

24. Système d'établissement de connexion pour services de diffusion selon la revendication 23, dans lequel la MS est conçue pour inclure une demande d'établissement de connexion destinée aux diffusions de contenus multiples, dans un champ d'Informations Codées de Type/Longueur/Valeur, TLV, d'un message de Demande d'Ajout de Service Dynamique, DSA_REQ, avant la transmission.

25. Système d'établissement de connexion pour services de diffusion selon la revendication 23, dans lequel la BS est conçue pour inclure les identificateurs dans un champ d'Informations Codées TLV d'un message de Réponse d'Ajout de Service Dynamique, DSA_RSP, avant l'allocation.

26. Système d'établissement de connexion pour services de diffusion selon la revendication 23, dans lequel le premier identificateur est un Identificateur de Connexion de Transport, CID.

27. Système d'établissement de connexion pour services de diffusion selon la revendication 23, dans lequel le premier identificateur est un CID de multidiffusion.

28. Système d'établissement de connexion pour services de diffusion selon la revendication 23, dans lequel la BS est conçue pour allouer des valeurs de combinaison obtenues par une combinaison du premier identificateur et des seconds identificateurs en tant que troisièmes identificateurs qui sont mis en correspondance de façon biunivoque avec les diffusions de contenus multiples.

29. Système d'établissement de connexion pour services de diffusion selon la revendication 23, dans lequel la BS est conçue pour allouer une valeur de combinaison obtenue par une combinaison du premier identificateur et des seconds identificateurs en tant que quatrième identificateur mis en correspondance avec le service de diffusion particulier.

30. Système d'établissement de connexion pour services de diffusion selon la revendication 29, dans lequel la BS est conçue pour inclure des informations indiquant la position et la taille de données MBS dans un élément d'informations de données MBS d'un message MBS MAP d'une trame de liaison descendante avant sa transmission.

31. Système d'établissement de connexion pour services de diffusion selon la revendication 30, dans lequel le message MBS MAP contient des informations indiquant un nombre d'éléments d'informations représentatifs de la position et de la taille de données MBS ayant le second identificateur.

32. Système d'établissement de connexion pour services de diffusion selon la revendication 30, dans lequel les informations indiquant la position et la taille des données MBS sont représentées par le premier identificateur et le second identificateur.

33. Système d'établissement de connexion pour services de diffusion selon la revendication 32, dans lequel les données MBS sont contenues séquentiellement dans un champ de salves de données MBS d'une trame de liaison descendante sur la base des informations représentées par le premier identificateur et le second identificateur.

34. Système d'établissement de connexion pour services de diffusion selon la revendication 32, dans lequel les données MBS sont incluses de façon aléatoire dans un champ de salves de données MBS d'une trame de liaison descendante indépendamment des informations représentées par le premier identificateur et le second identificateur.

35. Système d'établissement de connexion pour services de diffusion selon la revendication 34, dans lequel les données MBS sont identifiées par un identificateur de canal logique contenu dans le message MBS MAP.

36. Système d'établissement de connexion pour services de diffusion selon la revendication 23, dans lequel le second identificateur est un ID de contenus MBS mis en correspondance avec l'au moins une diffusion de contenu.

37. Système d'établissement de connexion pour services de diffusion selon la revendication 23, dans lequel le second identificateur est un identificateur de canal logique alloué à des diffusions de contenus.

38. Système d'établissement de connexion pour services de diffusion selon la revendication 37, dans lequel l'identificateur de canal logique est utilisé pour distinguer le second identificateur qui appartient au même premier identificateur.
